Europäisches Patentamt

**European Patent Office**

Office européen des brevets

(19)

(11) Publication number: **0 005 631**
**B1**

(12) **EUROPEAN PATENT SPECIFICATION**

(45) Date of publication of patent specification: **17.03.82**     (51) Int. Cl.³: **F 16 L  3/10** //B65G19/18

(21) Application number: **79300859.0**

(22) Date of filing: **17.05.79**

(54) Tube hanger.

(30) Priority: **18.05.78 US  907119**

(43) Date of publication of application:
**28.11.79 Bulletin 79/24**

(45) Publication of the grant of the patent:
**17.03.82 Bulletin 82/11**

(84) Designated Contracting States:
**BE DE FR GB IT NL SE**

(56) References cited:
**AU - A - 36 221/68
DE - A - 2 148 116
FR - A - 1 328 423
US - A - 3 902 995
US - A - 3 905 473
US - A - 3 920 340
US - A - 3 962 996
US - A - 3 971 714
US - A - 4 031 857
US - A - 4 071 136**

(73) Proprietor: **Intraco, Inc.
P.O. Box 379
Oskaloosa, Iowa (US)**

(72) Inventor: **Jones, Robert D.
129 K Avenue East Oskaloosa
Mahaska Iowa (US)**

(74) Representative: **Jones, Alan John et al,
CARPMAELS & RANSFORD 43 Bloomsbury
Square
London, WC1A 2RA (GB)**

· Courier Press, Leamington Spa, England.

Tube Hanger

The present invention relates generally to conveying systems in which material is conveyed through tubes, and more particularly to a tube hanger for such conveying systems.

In conveying systems of a type including a tubular circuitous network having a circuitous cable or chain conveyor therein, it is customary to hang such tubes from various support structures around a building or the like. A common type of clamp for such use is a sheet metal structure composed of two parts and having holes in each end. The two clamp parts are then bolted together around such tube and to whatever support structure is provided in the building to provide a hanger for such tubular network. It can be easily appreciated that this is a relatively time consuming procedure since a large number of such support structures are necessary for each cable conveying system and, of course the larger the system the more time consuming this becomes.

Another problem associated with the prior art of hanging tubular conveying systems is the one of cost. While the total cost for individual hanging mechanisms is not great, even small savings in the manufacturing costs thereof can be very significant because of the large number of such tube hanging devices which are used for each conveying system. Consequently, there is an economic incentive to keep the costs of such tube hanging equipment at a minimum.

Various proposals have been made, in the prior art, to produce pipe hangers or the like of a simple construction so as to reduce manufacturing costs. Some of these proposals employ substantially identical members or blanks which are cut from sheet material and which are secured together by a bolt or hook. However, these proposals still have certain individual disadvantages. For example, the pipe clamp according to DE—A—2148116 includes straps which are made from identical flat strips of sheet material. An end portion of each strip is pressed, in the plane of the sheet, to form a U-section. The U-shaped portion is integral with a straight portion having an aperture to receive a bolt. The end of the outermost limb of the U-shaped portion defines a hook. In the assembled clamp, the hooks of each U-shaped portion of each strap interengage and a bolt passes through the aligned apertures in the straight portions. One disadvantage of this type of clamp is that an extra pressing operation is required because the flat surface of the U-shaped portion of each strip is intended to engage the wall surface of the pipe. Moreover, the hooks in the end of each U-shaped portion are designed to engage only as a result of this pressing and they may also need to be deformed by the press to improve their engagement whilst enabling a greater surface area of the U-shaped portions to contact the pipe (see in particular Fig. 4).

Furthermore, there is a slight waste of the sheet material, from which the strips or blanks are cut, in the region of the hooks. Therefore, this type of clamp does not solve the problem of reducing manufacturing costs to a minimum.

Another type of tube hanger is described in US—A 947441. In this type of hanger, generally similar members are also cut from sheet material to define U-shaped members, but the edges of the sheet material are intended to engage the wall surface of the tube and not the flat surface of the material as in the previous case. Whilst this partly avoids the additional pressing operation, some pressing or forming is still required with regard to the shape and function of a hook on the end of each U-shaped member. More disadvantageously, the shape of the U-shaped members leads to an appreciable loss of sheet material when they are cut out. This is aggravated by the semicircular form of the U-shaped members and the difference in the radii of curvature of the inside and outside edges of the tube engaging portion and by the shape and position of the folded hook portion. Thus, the problem of reducing manufacturing costs to a minimum is not solved by this proposal.

The invention as claimed is intended to solve the latter problems by providing a hanger for supporting a tube, the hanger comprising a pair of substantially identical members each including a hook portion, a tube engaging portion and a suspension portion, an opening being disposed in the suspension portion, the hook portions of said members being in engagement with each other and said openings being substantially in alignment, the hanger including means extending through the openings in said members for connecting said hanger to a supporting member and for holding said members together in a tube supporting position; each member being made from sheet material by cutting along inside and outside contours on the plane of said sheet material whereby a sheet edge of the inner contour of the tube engaging portion of each member is provided · for engaging said tube, one said members being obverted with respect to the other such that the sheet edges, defining the inside contours of the tube engaging portions of the respective members, face in opposite directions; characterised in that said inside and outside contours of said members are substantially identical so that they can be cut from said sheet material without wasting said sheet material between said members.

When the hanger is intended to support a tube of circular cross-section, the arcuate extent of each of the sheet edges, which are intended to engage the tube, is preferably less than half the circumference of the circular tube. In this case, the inside and outside contours of said sheet edges of the tube engaging portions having the same radius of curvature.

Preferably, each hook portion is substantially V-shaped, one limb of the V-shape extending away from the associated tube engaging portion towards an apex and then extending from the apex in the opposite direction.

The suspension portions may comprise elongated strips which define an elongated space therebetween when the members are in a tube supporting position and the hook portions are engaged. This is useful where the tube carried by the hanger has a slot along its length and the slot is closed by a cover which is removable to provide access to the interior of the tube.

The advantages offered by the invention are to provide an improved tube hanger for a conveyor apparatus, the tube hanger being economical to produce and dependable in use, as well as saving considerable labour time for installation.

One way of carrying out the invention is described in detail below with reference to drawings which illustrate only one specific embodiment, in which:—

Fig. 1 is a perspective view of a tube hanger in accordance with the invention and as shown in use;

Fig. 2 is a perspective exploded view of the tube hanger;

Fig. 3 is an enlarged cross-sectional view of the tube hanger taken along line 3—3 of Fig. 1;

Fig. 4 is a side elevational view of one-half of the tube hanger; and

Fig. 5 is a view taken along line 5—5 of Fig. 4.

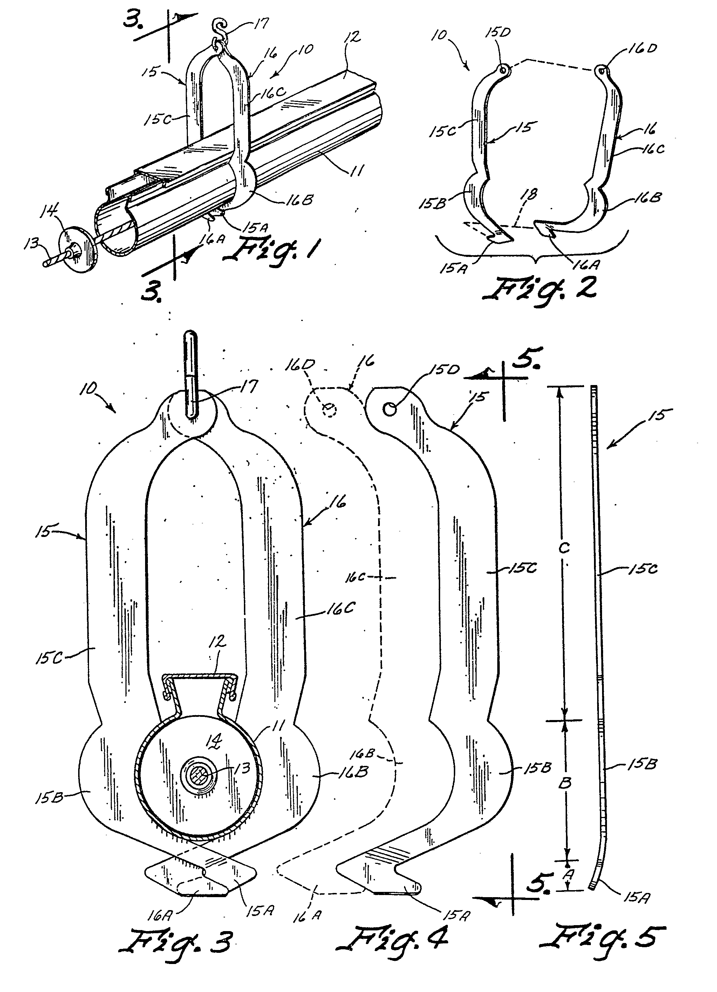

Referring now to the drawings wherein like reference numerals designate identical or corresponding parts throughout the several views, Fig. 1 shows a tube hanger 10 in accordance with the invention. A tube 11 is shown in Figs. 1 and 3 and is of a type generally used in cable conveyor structures or the like. Alternatively, the top can be closed by use of a sliding cover 12 or such tube 11 can be constructed such that it is completely cylindrical in shape if no top access is desired. A cable 13 with nylon discs members 14 rigidly attached thereto at regular intervals thereon is disposed within the circuitous tube 11 and is also circuitous in shape such that when the cable 13 is driven through the tube 11, granular or powdery materials within the tube 11 are conveyed to desired drop points around the tube 11. Example of such cable conveying systems are shown in U.S. Patent Nos. 3,905,473; 3,971,714; 3,920,340; 3,962,996; 3,902,995; 4,031,857 and 4,071,136. Since it is customary, as discussed above to hang such tubular structures 11, the tube hanger is used.

The tube hanger 10 is comprised primarily of two parts 15 and 16 which are identical in shape. The members 15 and 16 include a hook portion 15A and 16A, a tube engaging portion 15B and 16B and a suspension portion 15C and 16C. The hook portions 15A and 16A are preferably bent as shown in Fig. 5 but it is to be understood that this bending does not need to occur until the time of installation at which time the hook portions 15A and 16A can be hooked together and placed around the tube, and such bending will occur almost automatically when the top portions 15C and 16C are pushed together and held together as shown in Figs. 1 and 3. An opening 15D and 16D is disposed in the top of the suspension portion 15C and 16C. An S-shaped hook 17 is preferably used to be received through the openings 15B and 16B so as to secure the suspension portions 15C and 16C together and to also be available to hook onto whatever support structure is provided in whatever building such conveyor system is to be installed.

The construction of the members 15 and 16 are such that the inside contour is substantially identical to the outside contour so that these members can be stamped out of a single sheet of sheet metal and thereby one is right next to another and there is very little, if any, waste material. This is shown for example in solid and dashed lines in Fig. 4.

In operation, once the members 15 and 16 are stamped out of such sheet metal or the like, the hooks are merely joined together as indicated by the dashed line 18 in Fig. 2 to the position shown in Fig. 3 wherein the tube engaging portions 15B and 16B are secured around the tube 11 and in abutment therewith. The openings 15D and 16D are then aligned and the S-hook 17 is then placed through the openings 15D and 16D to secure the suspension ends 15C and 16C together. The S-shaped hook 17 is then hooked onto a support structure of a building or the like (not shown). Such tube hanging structure 10 is likewise provided whereever support for such tube 11 is needed.

## Claims

1. A hanger for supporting a tube (11), the hanger comprising a pair of substantially identical members (15, 16) each including a hook portion (15A, 16A), a tube engaging portion (15B, 16B) and a suspension portion (15C, 16C), an opening (15D, 16D) being disposed in the suspension portion, the hook portions (15A, 16A) of said members being in engagement with each other and said openings (15D, 16D) being substantially in alignment, the hanger including means (17) extending through the openings (15D, 16D) in said members for connecting said hanger to a supporting member and for holding said members together in a tube supporting position; each member being made from sheet material by cutting along inside and outside contours on the plane of said sheet material whereby a sheet edge of the inner contour of the tube engaging portion (15B, 16B) of each member is provided for engaging said tube (11), one of said members being obverted with respect to the other such that the sheet edges, defining the inside contours of the tube engaging portions (15B, 16B) of the respective members, face in opposite directions; characterised in that said inside and outside contours of said members (15, 16) are substantially identical so that they can be cut from said sheet material without wasting said sheet material between said members (15, 16).

2. A hanger according to claim 1 which is intended to support a tube of circular cross-section; characterised in that the arcuate extent of each sheet edge, which engages said tube when received between said tube engaging portions (15B, 16B), is less than half the circumference of the circular tube, the inside and outside contours of said sheet edges of the tube engaging portions having the same radius of curvature.

3. A hanger according to claim 1 or 2; characterised in that each of said hook portions (15A, 16A) are substantially V-shaped, one limb of the V-shape extending away from the associated tube engaging portion towards an apex and then extending from the apex in the opposite direction.

4. A hanger according to any one of claims 1—3; characterised in that said suspension portions (15C, 16C) comprise elongated strips which define an elongated space therebetween when said members (15, 16) are in said tube supporting position and said hook portions (15A, 16A) are in engagement with each other.

### Patentansprüche

1. Ein Aufhänger zum Tragen eines Rohres (11), der ein Paar von im wesentlichen identischen Teilen (15, 16) mit jeweils einem Verhakungsbereich (15A, 16A), einem Rohr-Anlagebereich (15B, 16B) und einem Aufhängbereich (15C, 16C) aufweist, wobei eine Öffnung (15D, 16D) in dem Aufhängbereich (15C, 16C) angeordnet ist, die Verhakungsbereiche (15A, 16A) dieser Teile miteinander in Eingriff und die Öffnungen (15D, 16D) im wesentlichen zueinander ausgerichtet sind, der Aufhänger Hilfsmittel aufweist, die sich durch die Öffnungen (15D, 16D) in den Teilen zur Verbindung des Aufhängers mit einer Tragevorrichtung und zum Zusammenhalten der Teile in einer Rohrtrageposition erstrecken, jedes Teil aus Plattenmaterial durch Schneiden entlang innerer und äußerer Konturen auf der Fläche dieses Plattenmaterials hergestellt ist, wobei eine Plattenkante der inneren Kontur des Rohr-Anlagebereiches (15B, 16B), jedes Teiles zum Anliegen an dem Rohr (11) ausgebildet ist, und eines der Teile umgekehrt in Bezug zum anderen so angeordnet ist, daß sich die Plattenkanten, die die innerseitigen Konturen der Rohr-Anlagebereiche (15B, 16B) der jeweiligen Teile bilden, in entgegengesetzte Richtung weisen, dadurch gekennzeichnet, daß die inneren und äußeren Konturen dieser Teile (15, 16) im wesentlichen identisch sind, so daß sie aus dem Plattenmaterial ohne Verlust von Plattenmaterial zwischen den Teilen (15, 16) ausgeschnitten werden können.

2. Ein Aufhänger nach Anspruch 1, der zum Tragen eines Rohres mit kreisförmigem Querschnitt bestimmt ist, dadurch gekennzeichnet, daß die bogenförmige Ausdehnung jeder Plattenkante, die am Rohr anliegt, wenn es zwischen den Rohr-Anlagebereichen (15B, 16B) aufgenommen wird, geringer als der halbe Umfang des kreisförmigen Rohres ist, wobei die inneren und die äußeren Konturen der Plattenkanten des Rohr-Anlagebereiches den gleichen Krümmungsradius haben.

3. Ein Aufhänger nach Anspruch 1 oder 2, dadurch gekennzeichnet daß jeder der Verhakungsbereiche (15A, 16A) im wesentlichen V-förmig ausgebildet ist, wobei ein Schenkel der V-Form von dem zugehörigen Rohr-Anlagebereich bis zu einer Spitze hin weggerichtet ist und sich von der Spitze aus in entgegengesetzter Richtung erstreckt.

4. Ein Aufhänger nach einem der Ansprüche 1 bis 3, dadurch gekennzeichnet, daß die Aufhängbereiche (15C, 16C) längliche Streifen aufweisen, die einen länglichen Zwischenraum zwischen sich begrenzen, wenn sich die Teile (15, 16) in der Rohr-Haltestellung befinden und die Verhakungsbereiche (15A, 16A) miteinander in Eingriff sind.

### Revendications

1. Dispositif de suspension pour tubes (11) comportant deux éléments (15, 16) sensiblement identiques comprenant chacun une partie formant crochet (15A, 16A), une partie (15B, 16B) venant en contact avec le tube et une partie de suspension (15C, 16C), un orifice (15D, 16D) étant ménagé dans la partie de suspension, les parties formant crochets (15A, 16A) de ces éléments étant en prise l'une avec l'autre et les orifices (15D, 16D) étant sensiblement alignés, le dispositif de suspension comprenant un moyen (17) traversant les orifices (15D, 16D) de ces éléments pour relier le dispositif de suspension à un organe de support et pour maintenir ces éléments ensemble dans une position de support du tube; chaque élément étant réalisé à partir de tôle par découpe selon des contours intérieur et extérieur dans le plan de la tôle, un bord de tôle du contour intérieur de la partie (15B, 16B), venant en contact avec le tube de chaque élément étant prévu pour s'appliquer contre ce tube (11), l'un de ces éléments étant retourné par rapport à l'autre, de telle sorte que les bords de la tôle définissant les contours intérieurs des parties (15B, 16B) des éléments respectifs venant en contact avec le tube soient orientés dans des directions opposées, caractérisé en ce que les contours intérieur et extérieur de ces éléments (15, 16) sont sensiblement identiques, de sorte qu'ils peuvent être découpés dans la tôle sans perte de tôle entre lesdits éléments (15, 16).

2. Dispositif de suspension suivant la revendication 1, destiné à supporter un tube de section droite circulaire, caractérisé en ce que l'étendue d'arc de chaque bord de la tôle qui vient en contact avec le tube lorsque celui-ci est placé entre les parties (15B, 16B) s'appliquant contre le tube est inférieure à la moitié de la circonférence du tube circulaire, les contours intérieur et extérieur de ces bords de la tôle dans les parties venant en contact avec le tube ayant le même rayon de courbure.

3. Dispositif de suspension suivant la revendication 1 ou 2, caractérisé en ce que chacune des parties formant crochets (15A, 16A) a essentiellement une forme de V, une branche de cette partie en V s'étendant depuis la partie associée venant en contact avec le tube en direction d'un sommet, puis s'étendant dans la direction opposée à partir de ce sommet.

4. Dispositif de suspension suivant l'une quelconque des revendications 1 à 3, caractérisé en ce que les parties de suspension (15C, 16C) comprennent des bandes allongées qui ménagent entre elles un espace de forme allongée quand lesdits éléments (15, 16) se trouvent dans la position de support du tube et lorsque les parties formant crochets (15A, 16A) sont en prise l'une avec l'autre.

Fig. 1

Fig. 2

Fig. 3

Fig. 4

Fig. 5